# EUROPEAN PATENT SPECIFICATION

(11) **EP 3 363 721 B1**
(45) Date of publication and mention of the grant of the patent: **17.11.2021**
(21) Application number: 17205781.2
(22) Date of filing: 07.12.2017
(51) Int. Cl.: B62J 6/02, B62J 17/02

(54) **STRADDLED VEHICLE**
GRÄTSCHSITZFAHRZEUG
VÉHICULE À ENFOURCHER

(30) Priority: 17.02.2017 JP 2017027855
(43) Date of publication of application: 22.08.2018
(73) Proprietor: Yamaha Hatsudoki Kabushiki Kaisha, Iwata-shi Shizuoka 438-8501 (JP)
(72) Inventor: Hongpong, Nantakorn, 10540 Samutprakarn (TH)
(74) Representative: Grünecker Patent- und Rechtsanwälte PartG mbB

(56) References cited:
- EP-A1- 3 115 288
- EP-A2- 3 115 286
- WO-A1-2009/038052
- WO-A1-2009/038054
- WO-A1-2016/156894

## Description

The present invention relates to a straddled vehicle according to the preamble of independent claim 1. Such a straddled vehicle can be taken from the prior art document WO 2009/038052 A1. Moreover, prior art document EP 3 115 286 A2 discloses a straddled vehicle, especially a so called naked bike. In a front view of said straddled vehicle, a dimension of a high beam lamp in a vehicle width direction is smaller than a dimension of a low beam lamp in the vehicle width direction. At least a portion of the high beam lamp and at least a portion of the low beam lamp are positioned at a vehicle center. A headlamp is mounted on a front fork so that it is pivoted together with the front fork in accordance with an operation of a steering handle. A lamp cover has an extension portion, which is disposed in front of a high beam cover in a plan view of the straddled vehicle and through which light is not transmitted. Said extension portion is arranged between the high beam lamp low beam lamp and extends in the vehicle width direction.

There is a type of straddled vehicle including a headlamp and a front cover. For example, in a straddled vehicle described in Japan Laid-open Patent Application Publication No. 2013-136305, a headlamp is disposed in front of a head pipe, and overlaps the head pipe in a vehicle front view. The front cover is disposed in front of the head pipe, and overlaps the headlamp in a vehicle side view. The front cover includes a center cover portion, a left cover portion and a right cover portion. The center cover portion includes an opening and a center lower portion. A clear cover of the headlamp is disposed in the opening. The center lower portion is located below the clear cover. The left cover portion is disposed leftward of the center cover portion. The right cover portion is disposed rightward of the center cover portion. The front ends of the right and left cover portions are located forward of the opening of the center cover portion. The headlamp with a large size, disposed in the center of the front cover in the vehicle width direction, is a distinguishing feature in design of the straddled vehicle.

It is an object of the present invention to provide a straddled vehicle with a headlamp that inhibit water from flowing toward the head of a rider in a straddled vehicle.

According to the present invention said object is solved by a straddled vehicle having the features of independent claim 1. Preferred embodiments are laid down in the dependent claims.

A straddled vehicle according to an aspect of the present teaching includes a head pipe, a headlamp, and a front cover. The headlamp includes a light source and a clear cover that causes a light irradiated from the light source to pass therethrough. The headlamp is disposed in front of the head pipe, and overlaps the head pipe in a vehicle front view. The front cover is disposed in front of the head pipe, and overlaps the headlamp in a vehicle side view.

The front cover includes a center cover portion, a left cover portion, a right cover portion and a bridge portion. The center cover portion overlaps the head pipe in the vehicle front view. The center cover portion includes an opening and a center lower portion. The opening exposes the clear cover therethrough. The center lower portion is located below the clear cover. The left cover portion is located leftward of the center cover portion, and protrudes forward of the opening. The right cover portion is located rightward of the center cover portion, and protrudes forward of the opening. The bridge portion is disposed in front of the opening, and overlaps the opening in the vehicle front view.

The clear cover has a shape curved to protrude forward, and is visible in the vehicle side view. The center lower portion has a shape recessed backward of the left cover portion and the right cover portion. The clear cover includes a clear cover upper portion and a clear cover lower portion. The clear cover lower portion is located lower than the clear cover upper portion. The bridge portion extends in a vehicle width direction and a vehicle back-and-forth direction, and is disposed between the clear cover upper portion and the clear cover lower portion.

In the straddled vehicle according to the present aspect, the clear cover has the shape curved to protrude forward. Therefore, when the vehicle is seen from obliquely ahead or a lateral side, the presence of the headlamp is more enhanced by the clear cover thus configured than by the clear cover having a flat surface.

Additionally, the center lower portion, located below the clear cover, has the backwardly recessed shape. This configuration reduces a range to be illuminated by the light irradiated from the headlamp on the front cover. Therefore, bright-dark contrast is enhanced between the headlamp and the center lower portion located in the periphery of the headlamp. Hence, the presence of the headlamp is further enhanced when the vehicle is seen from the front side.

On the other hand, when the center lower portion has a recessed shape, a large amount of water is likely to collect on the center lower portion. When flowing upward from the center lower portion, the water is supposed to flow toward the head of a rider.

However, in the straddled vehicle according to the present aspect, the bridge portion is disposed between the clear cover upper portion and the clear cover lower portion, and extends in the vehicle width direction. Therefore, when moving upward from the center lower portion, water is caused to flow in the vehicle width direction by the bridge portion. Additionally, the bridge portion also extends in the vehicle back-and-forth direction along the forwardly curved shape of the clear cover. The shape of the bridge portion thus formed is capable of causing water to flow backward by traveling wind and to efficiently flow in the vehicle width direction. Accordingly, it is possible to reduce water flowing toward the head of the rider.

The clear cover protrudes forward from an edge of the opening. In this case, when the vehicle is seen from a lateral side, the clear cover can be distinguished in design.

The bridge portion may be connected to right and left edges of the opening. In this case, upward movement of water can be inhibited as effectively as possible.

The clear cover upper portion and the clear cover lower portion are integrated. The bridge portion is disposed in front of the clear cover, and overlaps the clear cover in the vehicle front view. In this case, the clear cover upper portion and the clear cover lower portion are integrated, whereby the number of components can be reduced.

The clear cover upper portion is tilted upwards and backwards in the vehicle side view. In this case, water is likely to be led upward and backward when reaching the clear cover upper portion. However, the bridge portion is disposed below the clear cover upper portion. Therefore, water can be deflected sideward until reaching a portion from which the water is likely to be led upward and backward.

The clear cover lower portion may tilt downward and backward in the vehicle side view. In this case, the shape of the clear cover lower portion can make it difficult for water to reach the clear cover upper portion.

The light source may include a first light source for high beam use and a second light source for low beam use. The clear cover upper portion may cause a light irradiated from the first light source to pass therethrough. The clear cover lower portion may cause a light irradiated from the second light source to pass therethrough. In this case, the clear cover upper portion and the clear cover lower portion are usable as a clear cover for high beam use and that for a low beam use, respectively.

The clear cover lower portion may have a larger width than the clear cover upper portion in the vehicle front view. In this case, the range of light to be irradiated downward can be easily expanded.

At least part of the center lower portion may be located backward of a front end of the clear cover in a vehicle top view. In this case, reflection of light by the center lower portion can be lessened as much as possible.

The left cover portion may include a left slope surface tilting upward and backward in the vehicle side view. The left slope surface may be located leftward of the clear cover. The right cover portion may include a right slope surface tilting upward and backward in the vehicle side view. The right slope surface may be located rightward of the clear cover. The clear cover may be located forward of at least part of the left slope surface. The clear cover may be located forward of at least part of the right slope surface. In this case, visibility of light irradiated from the headlamp can be enhanced. Accordingly, when the vehicle is seen from a lateral side, the headlamp can be distinguished in design. Additionally, when flowing right and left from the center lower portion, water is likely to flow backward due to the right and left slope surfaces.

The clear cover may be located higher than at least part of the left slope surface. The clear cover may be located higher than at least part of the right slope surface. In this case, visibility of the light irradiated from the headlamp can be enhanced. Accordingly, when the vehicle is seen from a lateral side, the headlamp can be distinguished in design.

The straddled vehicle may further include a front wheel and a front fender disposed above the front wheel. The front fender may have a width increasing backward. The front fender may be disposed between a front end of the left cover portion and a front end of the right cover portion in the vehicle width direction. In this case, the bridge portion can inhibit upward movement of water flowing from the front fender to the center lower portion.

The straddled vehicle may further include a steering shaft, a handle member and a meter unit. The steering shaft may be inserted into the head pipe. The handle member may be connected to the steering shaft. The meter unit may include a speedometer and may be attached to the handle member. The meter unit may be exposed forward. In this case, water have chances of upwardly moving to the exposed meter unit, but the bridge portion can inhibit the upward movement of water. Therefore, the meter unit is unlikely to become dirty.

The front cover may further include a left lower cover portion, a right lower cover portion, a left recess and a right recess. The left lower cover portion may be disposed below the left cover portion, and at least part of the left lower cover portion may be located leftward of the left cover portion. The right lower cover portion is disposed below the right cover portion, and at least part of the right lower cover portion may be located rightward of the right cover portion. The left recess is located between the left cover portion and the left lower cover portion, and is recessed inward in the vehicle width direction. The right recess is located between the right cover portion and the right lower cover portion, and is recessed inward in the vehicle width direction. In this case, the right and left recesses can inhibit upward movement of water.

### BRIEF DESCRIPTION OF THE DRAWINGS

FIG. 1 is a side view of a straddled vehicle according to a preferred embodiment.
FIG. 2 is a front view of the straddled vehicle.
FIG. 3 is a side view of a front portion of the straddled vehicle.
FIG. 4 is a front view of the front portion of the straddled vehicle.
FIG. 5 is a top view of the front portion of the straddled vehicle.
FIG. 6 is a perspective view of the front portion of the straddled vehicle.
FIG. 7 is an exploded perspective view of the front portion of the straddled vehicle.
FIG. 8 is a view of the front portion of the straddled vehicle seen from obliquely above.
FIG. 9 is a cross-sectional view of FIG. 4 taken along line IX-IX.
FIG. 10 is a cross-sectional view of FIG. 4 taken along line X-X.

### DETAILED DESCRIPTION OF THE PREFERRED EMBODIMENTS

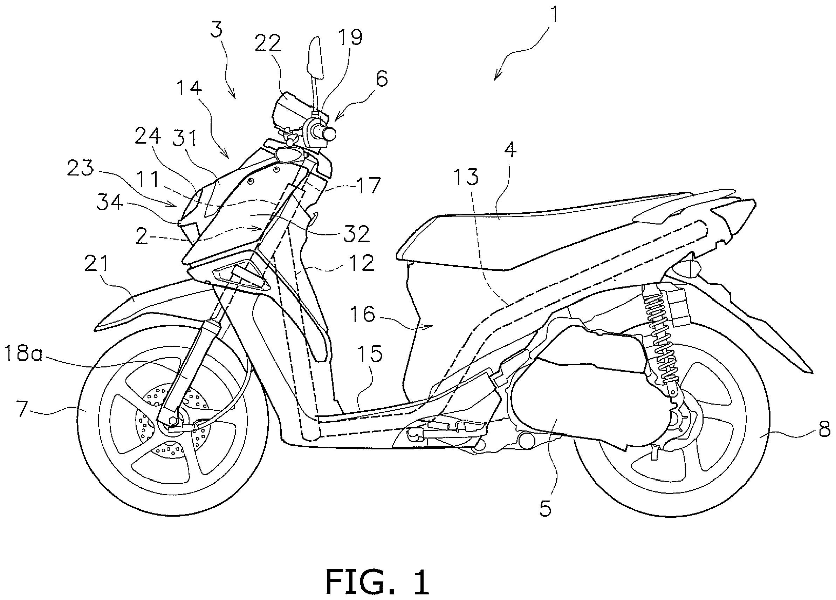

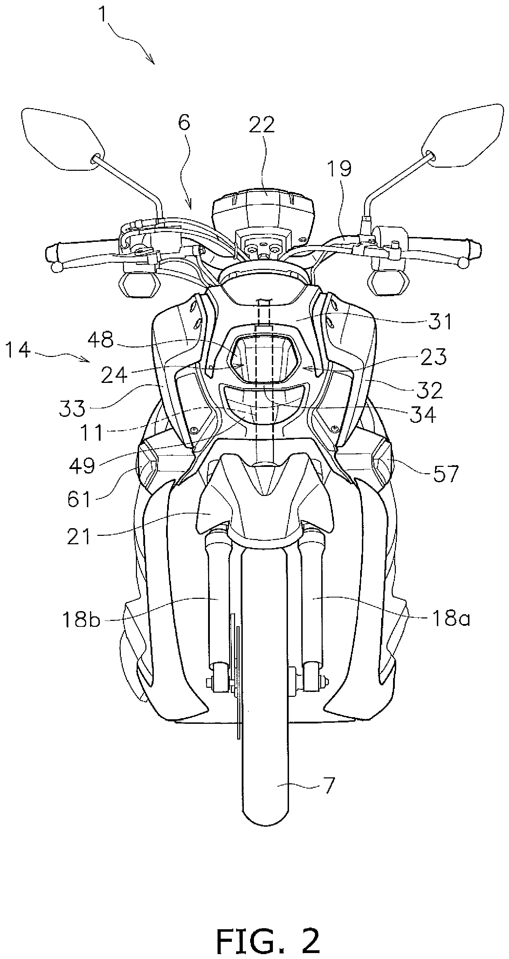

A straddled vehicle according to a preferred embodiment will be hereinafter explained with reference to drawings. FIG. 1 is a side view of a straddled vehicle 1 according to the preferred embodiment. FIG. 2 is a front view of the straddled vehicle 1 according to the preferred embodiment. The straddled vehicle 1 according to the present preferred embodiment is a motorcycle. As shown in FIG. 1, the straddled vehicle 1 includes a vehicle body frame 2, a vehicle body cover 3, a seat 4, a power unit 5, a steering device 6, a front wheel 7 and a rear wheel 8.

The vehicle body frame 2 includes a head pipe 11, a down frame 12 and a rear frame 13. The head pipe 11 is disposed in the center of the vehicle in a vehicle width direction. The head pipe 11 extends forward and downward. The down frame 12 extends downward from the head pipe 11. The rear frame 13 is connected to the down frame 12, and extends backward therefrom. The rear end of the rear frame 13 is located in a higher position than the front end thereof.

It should be noted that the terms "front", "rear", "right" and "left" are defined as indicating front, rear, right and left directions seen from a rider seated on the seat 4. The term "connection" is not limited to direct connection, and encompasses indirect connection. Additionally, the term "connection" is not limited to a condition that separate members are fixed to each other, and encompasses a condition that a plurality of portions in an integrated member continue to each other.

The term "inward in the vehicle width direction" means directions that approach to the center of the straddled vehicle 1 in the vehicle width direction. The term "outward in the vehicle width direction" means opposite directions to "inward in the vehicle width direction". In other words, the term "outward in the vehicle width direction" means directions that separate from the center of the straddled vehicle 1 in the vehicle width direction.

The vehicle body cover 3 includes a front cover 14, a foot board 16 and a rear cover 16. The front cover 14 is disposed in front of the head pipe 11. The front cover 14 covers the head pipe 11 and the down frame 12.

A headlamp 23 is attached to the front cover 14. The front cover 14 overlaps the headlamp 23 in the vehicle side view. The headlamp 23 is disposed in front of the head pipe 11. The headlamp 23 overlaps the head pipe 11 in the vehicle front view. The headlamp 23 includes a clear cover 24. The clear cover 24 is made of transparent material.

The rear cover 16 covers the rear frame 13. The rear cover 16 is disposed below the seat 4. The foot board 15 is disposed between the front cover 14 and the rear cover 16. The foot board 15 is disposed below and in front of the seat 4. The foot board 15 has a flat shaft in the vehicle width direction. It should be noted that the foot board 15 may have an upwardly protruding shape in the vehicle width directional middle portion thereof.

The power unit 5 is disposed below the seat 4. The power unit 5 is supported to be pivotable with respect to the rear frame 13. The power unit 5 includes, for instance, an engine and a transmission. The power unit 5 supports the rear wheel 8 such that the rear wheel 8 is rotatable. The rear wheel 8 is disposed below the seat 4.

The steering device 6 is turnably supported by the head pipe 11. The steering device 6 supports the front wheel 7 such that the front wheel 7 is rotatable. The steering device 6 includes a steering shaft 17, left and right suspensions 18a and 18b, and a handle member 19. The steering shaft 17 is inserted into the head pipe 11, and extends forward and downward. The left and right suspensions 18a and 18b extend forward and downward. The left and right suspensions 18a and 18b support the front wheel 7 such that the front wheel 7 is rotatable. A front fender 21 is disposed above the front wheel 7.

The handle member 19 is connected to the upper end of the steering shaft 17. A meter unit 22 is attached to the handle member 19. The meter unit 22 includes a speedometer. Any cover is not disposed in front of the meter unit 22. Thus, the meter unit 22 is exposed forward.

As shown in FIG. 2, the front cover 14 includes a center cover portion 31, a left cover portion 32, a right cover portion 33 and a bridge portion 34. The center cover portion 31 overlaps the head pipe 11 in the vehicle front view. The center cover portion 31 is located between the left cover portion 32 and the right cover portion 33 in the vehicle width direction. The left cover portion 32 is located leftward of the center cover portion 31. The right cover portion 33 is located rightward of the center cover portion 31.

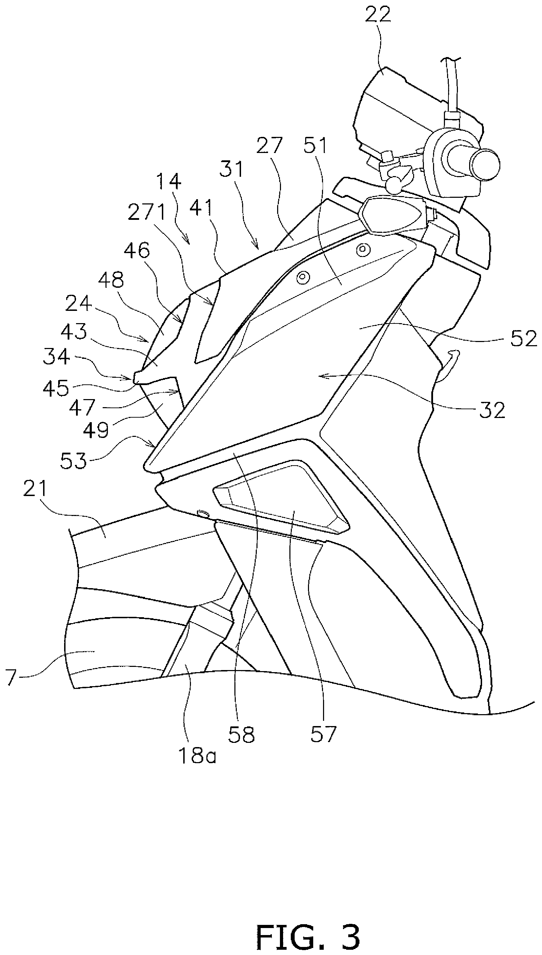

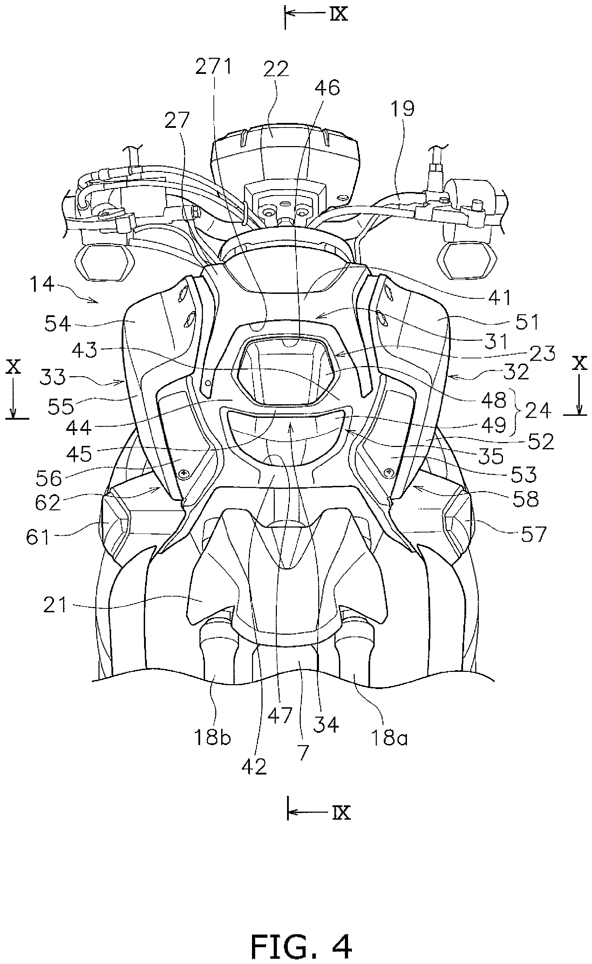

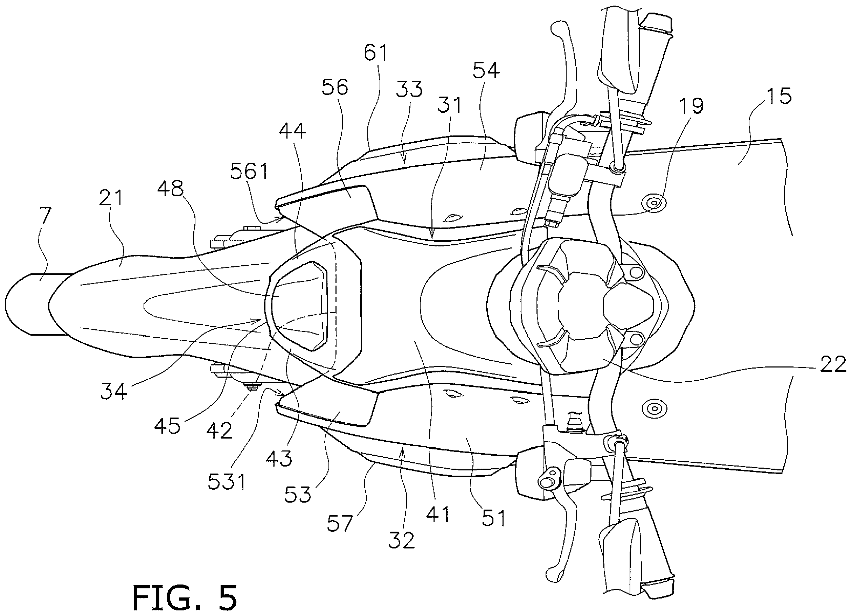

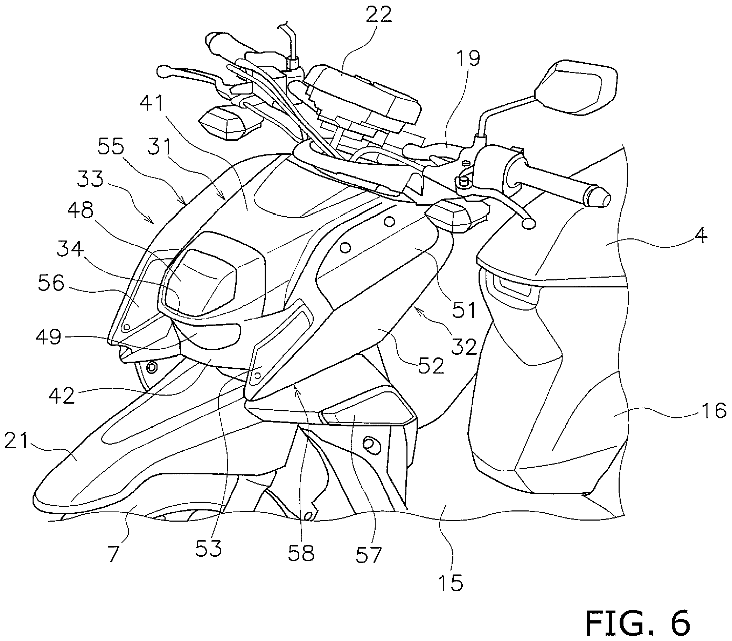

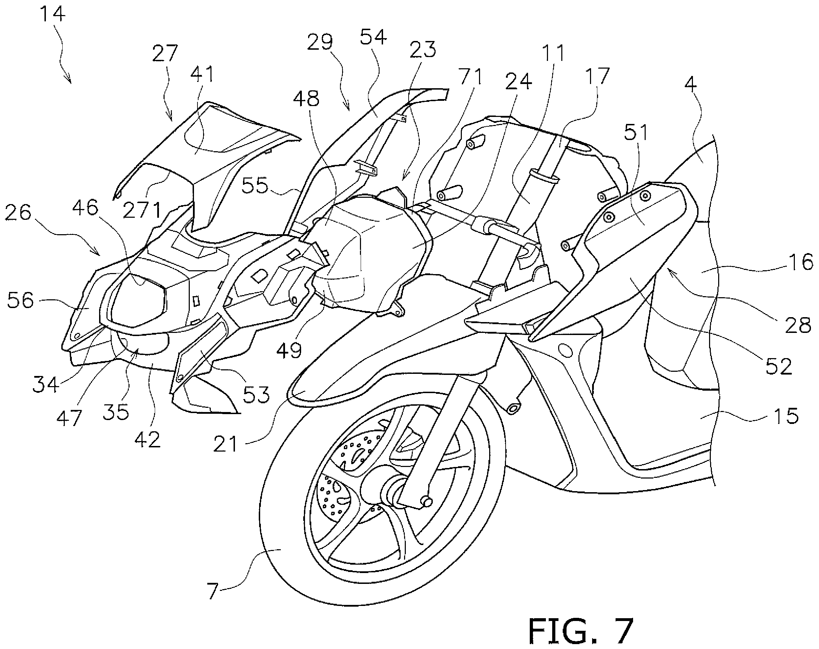

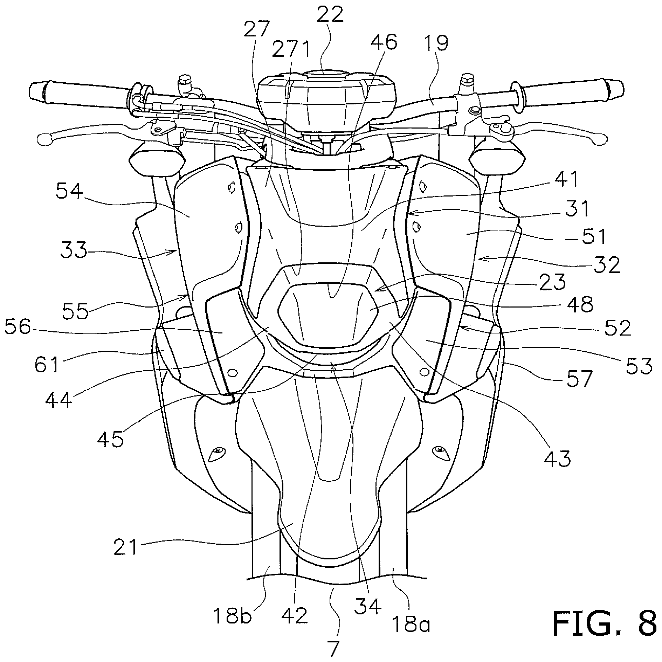

FIG. 3 is a side view of a front portion of the straddled vehicle 1. FIG. 4 is a front view of the front portion of the straddled vehicle 1. FIG. 5 is a top view of the front portion of the straddled vehicle 1. FIG. 6 is a perspective view of the front portion of the straddled vehicle 1. FIG. 7 is an exploded perspective view of the front portion of the straddled vehicle 1. FIG. 8 is a view of the front portion of the straddled vehicle 1 seen from obliquely above.

As shown in FIG. 7, the front cover 14 includes an opening 35. As shown in FIG. 4, the opening 35 is provided in the center cover portion 31. The clear cover 24 is exposed to the outside of the front cover 14 through the opening 35. The center cover portion 31 includes a center upper portion 41 and a center lower portion 42. The center upper portion 41 is located above the opening 35. As shown in FIG. 3, the center upper portion 41 tilts forward and downward.

The center lower portion 42 is located below the clear cover 24. As shown in FIGS. 5 and 6, the center lower portion 42 has a shape recessed backward of the left cover portion 32 and the right cover portion 33. In the vehicle top view, at least part of the center lower portion 42 is located backward of the front end of the clear cover 24. The center lower portion 42 is located backward of the bridge portion 34. As shown in FIG. 4, in the vehicle front view, the up-and-down directional length of the center lower portion 42 is shorter than that of the center upper portion 41.

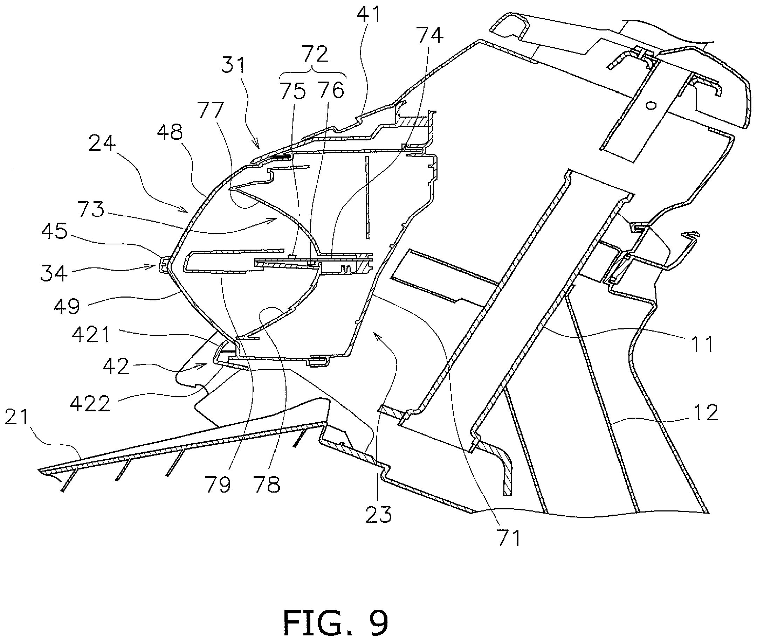

FIG. 9 is a cross-sectional view of FIG. 4 taken along line IX-IX. As shown in FIG. 9, the center lower portion 42 includes an upper slope surface 421 and a lower slope surface 422. The upper slope surface 421 tilts forward and downward. The lower slope surface 422 is located below the upper slope surface 421. The lower slope surface 422 tilts forward and upward. The center lower portion 42 has a bent shape between the upper slope surface 421 and the lower slope surface 422.

The bridge portion 34 is disposed in front of the opening 35, and overlaps the opening 35 in the vehicle front view. In other words, the bridge portion 34 is disposed in front of the clear cover 24, and overlaps the clear cover 24 in the vehicle front view. The bridge portion 34 is disposed across the opening 35 in the vehicle width direction. The bridge portion 34 is connected to the left edge and the right edge of the opening 35. The bridge portion 34 extends in the vehicle width direction and the vehicle back-and-forth direction. In other words, the bridge portion 34 has a shape curved to protrude forward.

As shown in FIG. 4, the bridge portion 34 includes a left bridge 43, a right bridge 44 and a center bridge 45. The left bridge 43 is connected to the left edge of the opening 35. The right bridge 44 is connected to the right edge of the opening 35. The center bridge 45 is disposed between the left bridge 43 and the right bridge 44 in the vehicle width direction.

The center bridge 45 is located in front of the clear cover 24. The center bridge 45 overlaps the clear cover 24 in the vehicle front view. The left bridge 43 is located leftward of the clear cover 24. The left bridge 43 overlaps the clear cover 24 in the vehicle side view. The right bridge 44 is located rightward of the clear cover 24. The right bridge 44 overlaps the clear cover 24 in the vehicle side view.

As shown in FIG. 5, in the vehicle top view, the left bridge 43 extends forward and inward in the vehicle width direction. In the vehicle top view, the right bridge 44 extends forward and inward in the vehicle width direction. In the vehicle top view, the center bridge 45 extends in the vehicle width direction.

As shown in FIG. 4, the up-and-down directional dimension of the center bridge 45 is smaller than that of the left bridge 43 and that of the right bridge 44. The up-and-down directional dimension of the left bridge 43 reduces toward the center bridge 45. The up-and-down directional dimension of the right bridge 44 reduces toward the center bridge 45.

The opening 35 includes an upper opening 46 and a lower opening 47. The upper opening 46 is located above the bridge portion 34, whereas the lower opening 47 is located below the bridge portion 34. In the vehicle front view, the upper opening 46 is larger than the lower opening 47 in the up-and-down direction. In the vehicle front view, the lower opening 47 is larger than the upper opening 46 in the vehicle width direction.

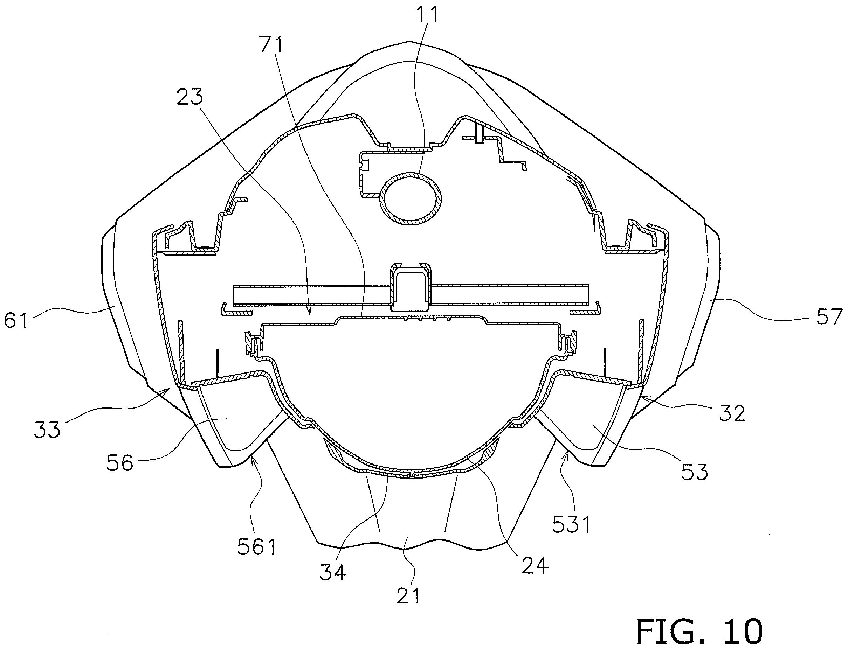

The clear cover 24 has a shape curved to protrude forward, and is visible in the vehicle side view. The clear cover 24 protrudes forward from the edge of the opening 35. As shown in FIG. 9, the clear cover 24 has a shape curved to protrude forward in the vehicle side view. FIG. 10 is a cross-sectional view of FIG. 4 taken along line X-X. As shown in FIG. 10, the clear cover 24 has a shape curved to protrude forward in the vehicle top view. In other words, the clear cover 24 is made in the shape of approximately half a sphere. As shown in FIGS. 9 and 10, the clear cover 24 has a cross-sectional contour made in the shape of a semicircular arc.

As shown in FIG. 4, the clear cover 24 includes a clear cover upper portion 48 and a clear cover lower portion 49. The clear cover lower portion 49 is located below the clear cover upper portion 48. The bridge portion 34 is disposed between the clear cover upper portion 48 and the clear cover lower portion 49.

The clear cover upper portion 48 is disposed in the upper opening 46. The clear cover upper portion 48 is exposed to the outside through the upper opening 46. The clear cover lower portion 49 is disposed in the lower opening 47. The clear cover lower portion 49 is exposed to the outside through the lower opening 47. The clear cover upper portion 48 and the clear cover lower portion 49 are integrated with each other.

In the vehicle side view, the clear cover upper portion 48 tilts upward and backward. In the vehicle side view, the clear cover lower portion 49 tilts downward and backward. In the vehicle front view, the clear cover upper portion 48 is larger than the clear cover lower portion 49 in the up-and-down direction. In the vehicle front view, the clear cover lower portion 49 is larger than the clear cover upper portion 48 in the vehicle width direction. In other words, the width of the clear cover lower portion 49 is wider than that of the clear cover upper portion 48 in the vehicle front view.

The left cover portion 32 protrudes forward of the opening 35. The left cover portion 32 includes an upper left lateral surface 51 and a lower left lateral surface 52. The upper left lateral surface 51 tilts downward and outward in the vehicle width direction. The lower left lateral surface 52 is located below the upper left lateral surface 51. The lower left lateral surface 52 tilts upward and outward in the vehicle width direction. The lateral surface of the left cover portion 32 has a bent shape between the upper left lateral surface 51 and the lower left lateral surface 52.

The front surface of the left cover portion 32 includes a left slope surface 53. The left slope surface 53 tilts upward and backward in the vehicle side view. The left slope surface 53 is located leftward of the clear cover 24. The upper end of the left slope surface 53 is located higher than at least part of the bridge portion 34. The upper end of the left slope surface 53 is located lower than that the upper end of the upper opening 46. The lower end of the left slope surface 53 is located lower than at least part of the bridge portion 34. The lower end of the left slope surface 53 is located lower than the lower end of the lower opening 47.

The clear cover 24 is located forward of at least part of the left slope surface 53. The clear cover 24 is located higher than at least part of the left slope surface 53. Detailedly, the clear cover upper portion 48 is located forward of at least part of the left slope surface 53. The clear cover upper portion 48 is located higher than at least part of the left slope surface 53. The clear cover lower portion 49 is located forward of at least part of the left slope surface 53. The clear cover lower portion 49 is located higher than at least part of the left slope surface 53.

The right cover portion 33 has a shape bilaterally symmetric to the left cover portion 32. The right cover portion 33 protrudes forward of the opening 35. The right cover portion 33 includes an upper right lateral surface 54 and a lower right lateral surface 55. The upper right lateral surface 54 tilts downward and outward in the vehicle width direction. The lower right lateral surface 55 is located below the upper right lateral surface 54. The lower right lateral surface 55 tilts upward and outward in the vehicle width direction. The lateral surface of the right cover portion 33 has a bent shape between the upper right lateral surface 54 and the lower right lateral surface 55.

The front surface of the right cover portion 33 includes a right slope surface 56. The right slope surface 56 tilts upward and backward in a vehicle side view. The right slope surface 56 is located rightward of the clear cover 24. The upper end of the right slope surface 56 is located higher than at least part of the bridge portion 34. The upper end of the right slope surface 56 is located lower than the upper end of the upper opening 46. The lower end of the right slope surface 56 is located lower than at least part of the bridge portion 34. The lower end of the right slope surface 56 is located lower than the lower end of the lower opening 47.

The clear cover 24 is located forward of at least part of the right slope surface 56. The clear cover 24 is located higher than at least part of the right slope surface 56. Detailedly, the clear cover upper portion 48 is located forward of at least part of the right slope surface 56. The clear cover upper portion 48 is located higher than at least part of the right slope surface 56. The clear cover lower portion 49 is located forward of at least part of the right slope surface 56. The clear cover lower portion 49 is located higher than at least part of the right slope surface 56.

As shown in FIG. 5, in the vehicle top view, a front edge 531 of the left slope surface 53 tilts backward and inward in the vehicle width direction. In the vehicle top view, a front edge 561 of the right slope surface 56 tilts backward and inward in the vehicle width direction. In the vehicle top view, the front fender 21 is disposed between the front end of the left cover portion 32 and the front end of the right cover portion 33 in the vehicle width direction. The width of the front fender 21 increases backward.

As shown in FIG. 4, the front cover 14 includes a left lower cover portion 57 and a left recess 58. The left lower cover portion 57 is disposed below the left cover portion 32. The left lower cover portion 57 has a shape protruding leftward from the left cover portion 32. At least part of the left lower cover portion 57 is located leftward of the left cover portion 32. The left recess 58 is located between the left cover portion 32 and the left lower cover portion 57. The left recess 58 has a shape recessed inward in the vehicle width direction. The left recess 58 extends backward and upward in the vehicle side view.

The front cover 14 includes a right lower cover portion 61 and a right recess 62. The right lower cover portion 61 is disposed below the right cover portion 33. The right lower cover portion 61 has a shape protruding rightward from the right cover portion 33. At least part of the right lower cover portion 61 is located rightward of the right cover portion 33. The right recess 62 is located between the right cover portion 33 and the right lower cover portion 61. The right recess 62 has a shape recessed inward in the vehicle width direction. The right recess 62 extends backward and upward in the vehicle side view.

As shown in FIG. 7, the front cover 14 includes a plurality of members provided separately from each other. Detailedly, the front cover 14 includes a front cover body 26, a front upper cover 27, a front left cover 28 and a front right cover 29. The front cover body 26 includes the opening 35, the bridge portion 34 and the center lower portion 42, all of which have been described above. The front cover body 26 includes the left slope surface 53 and the right slope surface 56. The front cover body 26 has an integrated shape.

The front upper cover 27 is provided separately from the front cover body 26, and is attached to the front cover body 26. The front upper cover 27 includes part of the center upper portion 41 described above. The front upper cover 27 has an integrated shape. A lower edge 271 of the front upper cover 27 has an upwardly recessed shape. As shown in FIG. 4, the lower edge 271 of the front upper cover 27 surrounds the clear cover upper portion 48 from above and the right and left lateral sides in the vehicle front view.

The front left cover 28 is provided separately from the front cover body 26, and is attached to the front cover body 26. The front left cover 28 includes the upper left lateral surface 51 and the lower left lateral surface 52. The front left cover 28 has an integrated shape. The front right cover 29 is provided separately from the front cover body 26, and is attached to the front cover body 26. The front right cover 29 includes the upper right lateral surface 54 and the lower right lateral surface 55. The front right cover 29 has an integrated shape.

As shown in FIG. 9, the headlamp 23 includes a casing 71 and a light source 72. The casing 71 is disposed behind the clear cover 24. The clear cover 24 is attached to the casing 71. A reflective member 73 and a board 74 are disposed between the casing 71 and the clear cover 24. The reflective member 73 has a shape curved to protrude backward. The light source 72 is attached to the board 74. The reflective member 73 forwardly reflects light irradiated from the light source 72. The clear cover 24 causes the light irradiated from the light source 72 to pass therethrough.

Detailedly, the light source 72 includes a first light source 75 for high beam use and a second light source 76 for low beam use. The first light source 75 is attached to the upper surface of the board 74. The second light source 76 is attached to the lower surface of the board 74.

The reflective member 73 includes an upper reflective portion 77 and a lower reflective portion 78. The upper reflective portion 77 is disposed above the board 74. The upper reflective portion 77 reflects light irradiated from the first light source 75 toward the clear cover upper portion 48. The clear cover upper portion 48 causes the light irradiated from the first light source 75 to pass therethrough. The lower reflective portion 78 reflects light irradiated from the second light source 76 toward the clear cover lower portion 49. The clear cover lower portion 49 causes the light irradiated from the second light source 76 to pass therethrough.

The headlamp 23 includes a partition member 79. The partition member 79 is disposed between the clear cover 24 and the casing 71. The partition member 79 divides up and down a space between the clear cover 24 and the casing 71. The partition member 79 is disposed behind the bridge portion 34. In other words, the partition member 79 overlaps the bridge portion 34 in the vehicle front view. The board 74 is disposed behind the partition member 79. The board 74 overlaps the partition member 79 in the vehicle front view.

In the straddled vehicle 1 according to the present preferred embodiment explained above, the clear cover 24 has a shape curved to protrude forward. Therefore, when the vehicle is seen from obliquely ahead or a lateral side, the presence of the headlamp 23 is more enhanced by the clear cover 24 thus configured than by the clear cover 24 having a flat surface.

Additionally, the center lower portion 42, located below the clear cover 24, has a backwardly recessed shape. This configuration reduces a range to be illuminated by the light irradiated from the headlamp 23 on the front cover 14. Therefore, bright-dark contrast is enhanced between the headlamp 23 and the center lower portion 42 located in the periphery of the headlamp 23. Hence, the presence of the headlamp 23 is further enhanced when the vehicle is seen from the front side.

The bridge portion 34 is disposed between the clear cover upper portion 48 and the clear cover lower portion 49, and extends in the vehicle width direction. Therefore, even when water such as rainwater is collected on the center lower portion 42 and upwardly moves therefrom, the water is caused to flow in the vehicle width direction by the bridge portion 34. Additionally, the bridge portion 34 also extends in the vehicle back-and-forth direction along the forwardly curved shape of the clear cover 24. The shape of the bridge portion 34 thus formed is capable of causing water to flow backward by traveling wind and to efficiently flow in the vehicle width direction. Accordingly, it is possible to reduce water flowing toward the head of the rider.

The clear cover 24 protrudes forward from the edge of the opening 35. Therefore, when the vehicle is seen from a lateral side, the clear cover 24 can be distinguished in design.

The bridge portion 34 is connected to the right edge and the left edge of the opening 35. Therefore, upward movement of water can be inhibited as effectively as possible.

The clear cover upper portion 48 and the clear cover lower portion 49 are integrated. This can reduce the number of components.

The clear cover upper portion 48 tilts upward and backward in the vehicle side view. Therefore, water is likely to be led upward and backward when reaching the clear cover upper portion 48. However, the bridge portion 34 is disposed below the clear cover upper portion 48. Therefore, water can be deflected sideward until reaching a portion from which the water is likely to be led upward and backward.

The clear cover lower portion 49 tilts downward and backward in the vehicle side view. Therefore, the shape of the clear cover lower portion 49 can make it difficult for water to reach the clear cover upper portion 48.

The clear cover upper portion 48 causes the light irradiated from the first light source 75 for high beam use to pass therethrough. The clear cover lower portion 49 causes the light irradiated from the second light source 76 for low beam use to pass therethrough. Therefore, the clear cover upper portion 48 and the clear cover lower portion 49 are usable as a clear cover for high beam use and that for a low beam use, respectively.

In the vehicle front view, the width of the clear cover lower portion 49 is wider than that of the clear cover upper portion 48. Therefore, the range of light to be irradiated downward can be easily expanded.

At least part of the center lower portion 42 is located backward of the front end of the clear cover 24 in the vehicle top view. Therefore, reflection of light by the center lower portion 42 can be lessened as much as possible.

The clear cover 24 is located forward of at least part of the left slope surface 53. The clear cover 24 is located forward of at least part of the right slope surface 56. With the configurations, visibility of the light irradiated from the headlamp 23 can be enhanced. Accordingly, when the vehicle is seen from a lateral side, the headlamp 23 can be distinguished in design. Additionally, when flowing right and left from the center lower portion 42, water is likely to flow backward due to the right and left slope surfaces.

The clear cover 24 is located higher than at least part of the left slope surface 53. The clear cover 24 is located higher than at least part of the right slope surface 56. With the configurations, visibility of the light irradiated from the headlamp 23 can be enhanced.

Accordingly, when the vehicle is seen from a lateral side, the headlamp 23 can be distinguished in design.

The width of the front fender 21 increases backward, and the front fender 21 is disposed between the front end of the left cover portion 32 and that of the right cover portion 33 in the vehicle width direction. Therefore, the bridge portion 34 can inhibit upward movement of water flowing from the front fender 21 to the center lower portion 42.

The meter unit 22 is exposed forward. In this case, water have chances of upwardly moving to the exposed meter unit 22, but the bridge portion 34 can inhibit the upward movement of water. Therefore, the meter unit 22 is unlikely to become dirty.

The left recess 58 is located between the left cover portion 32 and the left lower cover portion 57, and is recessed inward in the vehicle width direction. The right recess 62 is located between the right cover portion 33 and the right lower cover portion 61, and is recessed inward in the vehicle width direction. Therefore, the right and left recesses 62 and 58 can inhibit upward movement of water.

One preferred embodiment has been explained above. However, the present teaching is not limited to the aforementioned preferred embodiment, and a variety of changes can be made.

The straddled vehicle 1 is limited to a straddled vehicle with a foot board. The number of front wheels is not limited to one, and alternatively, may be two or greater. The number of rear wheels is not limited to one, and alternatively, may be two or greater.

The skilled person can conceive of various alternative embodiments that fall within the scope of the appended claims.

## Claims

1. A straddled vehicle, comprising:
a vehicle body frame (2);
a head pipe (11);
a down frame (12) and a rear frame (13), the head pipe (11) is disposed in a center of the vehicle in a vehicle width direction, the head pipe (11) extends forward and downward, the down frame (12) extends downward from the head pipe (11), the rear frame (13) is connected to the down frame (12), and extends backward therefrom, a rear end of the rear frame (13) is located in a higher position than a front end thereof;
a headlamp (23) disposed in front of the head pipe (11), the headlamp (23) overlapping the head pipe (11) in a vehicle front view, the headlamp (23) including a light source (72) and a clear cover (24), the clear cover (24) is configured to cause a light irradiated from the light source (72) to pass therethrough; and
a vehicle body cover (3) that includes a front cover (14), a foot board (16) and a rear cover (16), the front cover (14) is disposed in front of the head pipe (11), the front cover (14) covers the head pipe (11) and the down frame (12), the front cover (14) overlapping the headlamp (23) in a vehicle side view, wherein
the front cover (14) includes a center cover portion (31) overlapping the head pipe (11) in the vehicle front view, the center cover portion (31) including an opening (35) and a center lower portion (42), the opening (35) exposing the clear cover (24) therethrough, the center lower portion (42) being located below the clear cover (24),
a left cover portion (32) located leftward of the center cover portion (31), the left cover portion (32) protruding forward of the opening (35),
a right cover portion (33) located rightward of the center cover portion (31), the right cover portion (33) protruding forward of the opening (35), and
a bridge portion (34) disposed in front of the opening (35), the bridge portion (34) extends in a vehicle width direction and a vehicle back-and-forth direction,
the clear cover (24) has a shape curved to protrude forward, the clear cover (24) being visible in the vehicle side view,
the center lower portion (42) has a shape recessed backward of the left cover portion (32) and the right cover portion (33), **characterized in that**
the clear cover (24) includes a clear cover upper portion (48), and
a clear cover lower portion (49) located lower than the clear cover upper portion (48), the clear cover upper portion (48) and the clear cover lower portion (49) are integrated, and the bridge portion (34) is disposed in front of the clear cover (24) between the clear cover upper portion (48) and the clear cover lower portion (49), and the bridge portion (34) overlapping the clear cover (24) and the opening (35) in the vehicle front view, wherein the clear cover upper portion (48) tilts upward and backward in the vehicle side view, the left cover portion (32) includes a front left cover (28), the right cover portion (33) includes a front right cover (29), and the center cover portion (31) includes a front cover body (26), the front left cover (28) is provided separately from the front cover body 26, and is attached to the front cover body (26), the front left cover (28) includes an upper left lateral surface (51) and a lower left lateral surface (52), the front left cover (28) has an integrated shape, the front right cover (29) is provided separately from the front cover body (26), and is attached to the front cover body (26), the front right cover (29) includes an upper right lateral surface (54) and a the lower right lateral surface (55), the front right cover (29) has an integrated shape.

2. A straddled vehicle according to claim 1, **characterized in that** the clear cover (24) protrudes forward from an edge of the opening (35).

3. A straddled vehicle according to claim 1 or 2, **characterized in that** the bridge portion (34) is connected to right and left edges of the opening (35).

4. A straddled vehicle according to any of claims 1 to 3, **characterized in that** the clear cover lower portion (49) tilts downward and backward in the vehicle side view.

5. A straddled vehicle according to any of claims 1 to 4, **characterized in that** the light source (72) further includes
a first light source (75) configured for high beam use, and
a second light source (76) configured for low beam use,
the clear cover upper portion (48) is configured to cause a light irradiated from the first light source (75) to pass therethrough, and
the clear cover lower portion (49) is configured to cause a light irradiated from the second light source (76) to pass therethrough.

6. A straddled vehicle according to any of claims 1 to 5, **characterized in that** the clear cover lower portion (49) has a larger width than the clear cover upper portion (48) in the vehicle front view.

7. A straddled vehicle according to any of claims 1 to 6, **characterized in that** at least part of the center lower portion (42) is located backward of a front end of the clear cover (24) in a vehicle top view.

8. A straddled vehicle according to any of claims 1 to 7, **characterized in that** the left cover portion (32) includes a left slope surface (53) tilting upward and backward in the vehicle side view,
the left slope surface (53) is located leftward of the clear cover (24),
the right cover portion (33) includes a right slope surface (56) tilting upward and backward in the vehicle side view,
the right slope surface (56) is located rightward of the clear cover (24),
the clear cover (24) is located forward of at least part of the left slope surface (53), and
the clear cover (24) is located forward of at least part of the right slope surface (56).

9. A straddled vehicle according to claim 8, **characterized in that** the clear cover (24) is located higher than at least part of the left slope surface (53), and
the clear cover (24) is located higher than at least part of the right slope surface (56).

10. A straddled vehicle according to any of claims 1 to 9, **characterized by**:
a front wheel (7); and
a front fender (21) disposed above the front wheel (7), wherein
the front fender (21) has a width increasing backward, and
the front fender (21) is disposed between a front end of the left cover portion (32) and a front end of the right cover portion (33) in the vehicle width direction.

11. A straddled vehicle according to any of claims 1 to 10, **characterized by:**
a steering shaft (17) inserted into the head pipe (11);
a handle member (19) connected to the steering shaft (17); and
a meter unit (22) including a speedometer, the meter unit (22) being attached to the handle member (19), wherein
the meter unit (22) is exposed forward.

12. A straddled vehicle according to any of claims 1 to 11, **characterized in that** the front cover (14) further includes
a left lower cover portion (57) disposed below the left cover portion (32), at least part of the left lower cover portion (57) being located leftward of the left cover portion (32), a right lower cover portion (61) disposed below the right cover portion (33), at least part of the right lower cover portion (61) being located rightward of the right cover portion (33), a left recess (58) located between the left cover portion (32) and the left lower cover portion (57), the left recess (58) being recessed inward in the vehicle width direction, and a right recess (62) located between the right cover portion (33) and the right lower cover portion (61), the right recess (62) being recessed inward in the vehicle width direction.

## Patentansprüche

1. Ein Spreiz-Sitz-Fahrzeug, das umfasst:
einen Fahrzeug-Körper-Rahmen (2);
ein Kopf-Rohr (11);
einen Unter-Rahmen (12) und einen hinteren Rahmen (13), das Kopf-Rohr (11) ist in einer Mitte des Fahrzeugs in einer Fahrzeug-Breiten-Richtung angeordnet, das Kopf-Rohr (11) erstreckt sich nach vorne und nach unten, der Unter-Rahmen (12) erstreckt sich von dem Kopf-Rohr (11) nach unten, der hintere Rahmen (13) ist mit dem Unter-Rahmen (12) verbunden und erstreckt sich von diesem nach hinten, ein hinteres Ende des hinteren Rahmens (13) ist in einer höheren Position als ein vorderes Ende davon angeordnet;
einen Scheinwerfer (23), der vor dem Kopf-Rohr (11) angeordnet ist, der Scheinwerfer (23) überlappt das Kopf-Rohr (11) in einer Fahrzeug-Front-Ansicht, der Scheinwerfer (23) enthält eine Lichtquelle (72) und eine durchsichtige Abdeckung (24), die durchsichtige Abdeckung (24) ist konfiguriert, um ein Licht, das von der Lichtquelle (72) ausgestrahlt ist, durchzulassen; und
eine Fahrzeug-Körper-Abdeckung (3), die eine vordere Abdeckung (14), ein Fußbrett (16) und eine hintere Abdeckung (16) beinhaltet, die vordere Abdeckung (14) ist vor dem Kopf-Rohr (11) angeordnet, die vordere Abdeckung (14) deckt das Kopf-Rohr (11) und den Unter-Rahmen (12) ab, die vordere Abdeckung (14) überlappt den Scheinwerfer (23) in einer Fahrzeug-Seiten-Ansicht, wobei
die vordere Abdeckung (14) einen Mitten-Abdeck-Abschnitt (31) beinhaltet, der das Kopf-Rohr (11) in der Fahrzeug-Front-Ansicht überlappt, der Mitten-Abdeck-Abschnitt (31) beinhaltet eine Öffnung (35) und einen Mitten-Unter-Abschnitt (42), die Öffnung (35) legt die durchsichtige Abdeckung (24) hindurch frei, der Mitten-Unter-Abschnitt (42) ist unterhalb der durchsichtigen Abdeckung (24) angeordnet,
einen linken Abdeck-Abschnitt (32), der links von dem Mitten-Abdeck-Abschnitt (31) angeordnet ist, der linke Abdeck-Abschnitt (32) steht vor der Öffnung (35) hervor,
einen rechten Abdeck-Abschnitt (33), der rechts von dem Mitten-Abdeck-Abschnitt (31) angeordnet ist, der rechte Abdeck-Abschnitt (33) steht vor der Öffnung (35) hervor, und
einen Brücken-Abschnitt (34), der vor der Öffnung (35) angeordnet ist, der Brücken-Abschnitt (34) erstreckt sich in einer Fahrzeug-Breiten-Richtung und einer Fahrzeug-Rück-und-Vor-Richtung,
die durchsichtige Abdeckung (24) hat eine Form, die so gebogen ist, dass sie nach vorne ragt, die durchsichtige Abdeckung (24) ist in der Fahrzeug-Seiten-Ansicht sichtbar,
der Mitten-Unter-Abschnitt (42) hat eine Form, die nach hinten von dem linken Abdeck-Abschnitt (32) und dem rechten Abdeck-Abschnitt (33) zurückgesetzt ist,
**dadurch gekennzeichnet, dass**
die durchsichtige Abdeckung (24) einen durchsichtigen Abdeck-Oben-Abschnitt (48) beinhaltet, und
einen durchsichtigen Abdeck-Unten-Abschnitt (49), der tiefer liegt als der durchsichtige Abdeck-Oben-Abschnitt (48),
der durchsichtige Abdeck-Oben-Abschnitt (48) und der durchsichtige Abdeck-Unten-Abschnitt (49) sind integriert, und der Brücken-Abschnitt (34) ist vor der durchsichtigen Abdeckung (24) zwischen dem durchsichtige Abdeck-Oben-Abschnitt (48) und dem durchsichtige Abdeck-Unten-Abschnitt (49) angeordnet, und der Brücken-Abschnitt (34) überlappt die durchsichtige Abdeckung (24) und die Öffnung (35) in der Fahrzeug-Front-Ansicht, wobei der durchsichtige Abdeck-Oben-Abschnitt (48) in der Fahrzeug-Seiten-Ansicht nach oben und nach hinten kippt, der linke Abdeck-Abschnitt (32) eine vordere linke Abdeckung (28) enthält, der rechte Abdeck-Abschnitt (33) die vordere rechte Abdeckung (29) enthält und der Mitten-Abdeck-Abschnitt (31) in dem vorderen Abdeckungs-Körper (26) enthalten ist, die vordere linke Abdeckung (28) ist getrennt von dem vorderen Abdeckungs-Körper (26) vorgesehen und ist an dem vorderen Abdeckungs-Körper (26) befestigt, die vordere linke Abdeckung (28) beinhaltet eine obere linke Seitenfläche (51) und eine untere linke Seitenfläche (52), die vordere linke Abdeckung (28) hat eine integrierte Form die vordere rechte Abdeckung (29) ist getrennt von dem vorderen Abdeckungs-Körper (26) vorgesehen ist und an dem vorderen Abdeckungs-Körper (26) befestigt ist, die vordere rechte Abdeckung (29) beinhaltet eine obere rechte Seitenfläche (54) und
eine untere rechte Seitenfläche (55), die vordere rechte Abdeckung (29) hat eine integrierte Form.

2. Ein Spreiz-Sitz-Fahrzeug gemäß Anspruch 1, **dadurch gekennzeichnet, dass** die durchsichtige Abdeckung (24) von einer Kante der Öffnung (35) nach vorne ragt.

3. Ein Spreiz-Sitz-Fahrzeug gemäß Anspruch 1 oder 2, **dadurch gekennzeichnet, dass** der Brücken-Abschnitt (34) mit den rechten und linken Kanten der Öffnung (35) verbunden ist.

4. Ein Spreiz-Sitz-Fahrzeug gemäß irgendeinem der Ansprüche 1 bis 3, **dadurch gekennzeichnet, dass** der durchsichtige Abdeck-Unten-Abschnitt (49) in der Fahrzeug-Seiten-Ansicht nach unten und nach hinten kippt.

5. Ein Spreiz-Sitz-Fahrzeug gemäß irgendeinem der Ansprüche 1 bis 4, **dadurch gekennzeichnet, dass** die Lichtquelle (72) weiterhin beinhaltet
eine erste Lichtquelle (75), die für die Verwendung als Fernlicht konfiguriert ist, und eine zweite Lichtquelle (76), die für die Verwendung als Abblendlicht konfiguriert ist, der durchsichtige Abdeck-Oben-Abschnitt (48) ist konfiguriert ist, so dass er bewirkt, dass ein Licht, das von der ersten Lichtquelle (75) ausgestrahlt ist, durch ihn hindurchgeht, und
der durchsichtige Abdeck-Unten-Abschnitt (49) konfiguriert ist, so dass er bewirkt, dass ein Licht, das von der zweiten Lichtquelle (76) ausgestrahlt ist, durch ihn hindurchgeht.

6. Ein Spreiz-Sitz-Fahrzeug gemäß irgendeinem der Ansprüche 1 bis 5, **dadurch gekennzeichnet, dass** der durchsichtige Abdeck-Unten-Abschnitt (49) eine größere Breite aufweist als der durchsichtige Abdeck-Oben-Abschnitt (48), in der Fahrzeug-Front-Ansicht.

7. Ein Spreiz-Sitz-Fahrzeug gemäß irgendeinem der Ansprüche 1 bis 6, **dadurch gekennzeichnet, dass** zumindest ein Teil des Mitten-Unter-Abschnitts (42) hinter einem vorderen Ende der durchsichtigen Abdeckung (24) angeordnet ist, in der Fahrzeug-Draufsicht.

8. Ein Spreiz-Sitz-Fahrzeug gemäß irgendeinem der Ansprüche 1 bis 7, **dadurch gekennzeichnet, dass** der linke Abdeck-Abschnitt (32) eine linke Schräg-Fläche (53) beinhaltet, die nach oben und nach hinten geneigt ist, in der Fahrzeug-Seiten-Ansicht,
die linke Schräg-Fläche (53) links von der durchsichtigen Abdeckung (24) angeordnet ist,
der rechte Abdeck-Abschnitt (33) eine rechte Schräg-Fläche (56) aufweist, die nach oben und nach hinten geneigt ist, in der Fahrzeug-Seiten-Ansicht,
die rechte Schräg-Fläche (56) rechts von der durchsichtigen Abdeckung (24) angeordnet ist,
die durchsichtige Abdeckung (24) vor zumindest einem Teil der linken Schräg-Fläche (53) angeordnet ist, und
die durchsichtige Abdeckung (24) vor zumindest einem Teil der rechten Schräg-Fläche (56) angeordnet ist.

9. Ein Spreiz-Sitz-Fahrzeug gemäß Anspruch 8, **dadurch gekennzeichnet, dass** die durchsichtige Abdeckung (24) höher als zumindest ein Teil der linken Schräg-Fläche (53) angeordnet ist, und
die durchsichtige Abdeckung (24) höher als zumindest ein Teil der rechten Schräg-Fläche (56) angeordnet ist.

10. Ein Spreiz-Sitz-Fahrzeug gemäß irgendeinem der Ansprüche 1 bis 9, **gekennzeichnet durch**:
ein Vorder-Rad (7); und
einem Vorder-Kotflügel (21), der über dem Vorder-Rad (7) angeordnet ist, wobei der Vorder-Kotflügel (21) eine nach hinten zunehmende Breite hat, und
der Vorder-Kotflügel (21) zwischen einem vorderen Ende des linken Abdeck-Abschnitts (32) und einem vorderen Ende des rechten Abdeck-Abschnitts (33) in der Fahrzeug-Breiten-Richtung angeordnet ist.

11. Ein Spreiz-Sitz-Fahrzeug gemäß irgendeinem der Ansprüche 1 bis 10, **gekennzeichnet durch**:
eine Lenk-Welle (17), die in das Kopf-Rohr (11) eingesetzt ist;
ein Griff-Element (19), das mit der Lenk-Welle (17) verbunden ist; und
eine Mess-Einheit (22), die einen Geschwindigkeitsmesser beinhaltet, die Mess-Einheit (22) ist an dem Griff-Element (19) befestigt, wobei
die Mess-Einheit (22) nach vorne freigelegt ist.

12. Ein Spreiz-Sitz-Fahrzeug gemäß irgendeinem der Ansprüche 1 bis 11, **dadurch gekennzeichnet, dass** die vordere Abdeckung (14) weiterhin beinhaltet
einen linken unteren Abdeck-Abschnitt (57), der unter dem linken Abdeck-Abschnitt (32) angeordnet ist, zumindest ein Teil des linken unteren Abdeck-Abschnitts (57) ist links von dem linken Abdeck-Abschnitt (32) angeordnet,
einen rechten unteren Abdeck-Abschnitt (61), der unter dem rechten Abdeck-Abschnitt (33) angeordnet ist, zumindest ein Teil des rechten unteren Abdeck-Abschnitts (61) ist rechts von dem rechten Abdeck-Abschnitt (33) angeordnet,
eine linke Aussparung (58), die zwischen dem linken Abdeck-Abschnitt (32) und dem linken unteren Abdeck-Abschnitt (57) angeordnet ist, die linke Aussparung (58) ist in Fahrzeug-Breiten-Richtung nach innen vertieft, und
eine rechte Aussparung (62), die zwischen dem rechten Abdeck-Abschnitt (33) und dem rechten unteren Abdeck-Abschnitt (61) angeordnet ist, die rechte Aussparung (62) ist in Fahrzeug-Breiten-Richtung nach innen vertieft.

## Revendications

1. Véhicule à enfourcher, comprenant :
un châssis de carrosserie de véhicule (2) ;
un tube de tête (11) ;
un châssis inférieur (12) et un châssis arrière (13), le tube de tête (11) est disposé dans un centre du véhicule dans une direction de largeur de véhicule, le tube de tête (11) s'étend vers l'avant et vers le bas, le châssis inférieur (12) s'étend vers le bas depuis le tube de tête (11), le châssis arrière (13) est relié au châssis inférieur (12), et s'étend vers l'arrière de celui-ci, une extrémité arrière du châssis arrière (13) est située dans une position plus élevée qu'une l'extrémité avant de celui-ci ;
un phare (23) disposé devant le tube de tête (11), le phare (23) chevauchant le tube de tête (11) sur une vue avant de véhicule, le phare (23) comprenant une source lumineuse (72) et un couvercle transparent (24), le couvercle transparent (24) est configuré pour amener une lumière irradiée par la source lumineuse (72) à passer travers celui-ci ; et
un couvercle de carrosserie de véhicule (3) qui comprend un couvercle avant (14), un repose-pieds (16) et un couvercle arrière (16), le couvercle avant (14) est disposé devant le tube de tête (11), le couvercle avant (14) recouvre le tube de tête (11) et le châssis inférieur (12), le couvercle avant (14) chevauchant le phare (23) sur une vue de côté de véhicule, dans lequel
le couvercle avant (14) comprend une portion de couvercle centrale (31) chevauchant le tube de tête (11) sur la vue avant de véhicule, la portion de couvercle centrale (31) comprenant une ouverture (35) et une portion inférieure centrale (42), l'ouverture (35) exposant le couvercle transparent (24) à travers celle-ci, la portion inférieure centrale (42) étant située au-dessous du couvercle transparent (24),
une portion de couvercle gauche (32) située à gauche de la portion de couvercle centrale (31), la portion de couvercle gauche (32) faisant saillie vers l'avant de l'ouverture (35),
une portion de couvercle droite (33) située à droite de la portion de couvercle centrale (31), la portion de couvercle droite (33) faisant saillie vers l'avant de l'ouverture (35), et
une portion de pont (34) disposée devant l'ouverture (35), la portion de pont (34) s'étend dans une direction de largeur de véhicule et une direction d'un côté à l'autre de véhicule,
le couvercle transparent (24) a une forme incurvée pour faire saillie vers l'avant, le couvercle transparent (24) étant visible sur la vue de côté de véhicule,
la portion inférieure centrale (42) a une forme en retrait vers l'arrière de la portion de couvercle gauche (32) et de la portion de couvercle droite (33), **caractérisé en ce que** le couvercle transparent (24) comprend une portion supérieure de couvercle transparent (48), et
une portion inférieure de couvercle transparent (49) située plus bas que la portion supérieure de couvercle transparent (48),
la portion supérieure de couvercle transparent (48) et la portion inférieure de couvercle transparent (49) sont intégrées,
et la portion de pont (34) est disposée devant le couvercle transparent (24) entre la portion supérieure de couvercle transparent (48) et la portion inférieure de couvercle transparent (49), et la portion de pont (34) chevauchant le couvercle transparent (24) et l'ouverture (35) sur la vue avant de véhicule, dans lequel la portion supérieure de couvercle transparent (48) s'incline vers le haut et vers l'arrière sur la vue de côté de véhicule, la portion de couvercle gauche (32) comprend un couvercle avant gauche (28), la portion de couvercle droite (33) comprend un couvercle avant droit (29), et la portion de couvercle centrale (31) comprend un corps de couvercle avant (26), le couvercle avant gauche (28) est agencé séparément du corps de couvercle avant (26), et est fixé au corps de couvercle avant (26), le couvercle avant gauche (28) comprend une surface latérale supérieure gauche (51) et une surface latérale inférieure gauche (52), le couvercle avant gauche (28) a une forme intégrée, le couvercle avant droit (29) est agencé séparément du corps de couvercle avant (26), et est fixé au corps de couvercle avant (26), le couvercle avant droit (29) comprend une surface latérale supérieure droite (54) et une surface latérale inférieure droite (55), le couvercle avant droit (29) a une forme intégrée.

2. Véhicule à enfourcher selon la revendication 1, **caractérisé en ce que** le couvercle transparent (24) fait saillie vers l'avant depuis un bord de l'ouverture (35).

3. Véhicule à enfourcher selon la revendication 1 ou 2, **caractérisé en ce que** la portion de pont (34) est reliée à des bords droit et gauche de l'ouverture (35).

4. Véhicule à enfourcher selon l'une quelconque des revendications 1 à 3, **caractérisé en ce que** la portion inférieure de couvercle transparent (49) s'incline vers le bas et vers l'arrière sur la vue de côté de véhicule.

5. Véhicule à enfourcher selon l'une quelconque des revendications 1 à 4, **caractérisé en ce que** la source lumineuse (72) comprend en outre
une première source lumineuse (75) configurée pour une utilisation en feux de route, et
une seconde source lumineuse (76) configurée pour une utilisation en feux de croisement,
la portion supérieure de couvercle transparent (48) est configurée pour amener une lumière irradiée par la première source lumineuse (75) à passer à travers celle-ci, et la portion inférieure de couvercle transparent (49) est configurée pour amener une lumière irradiée par la seconde source lumineuse (76) à passer à travers celle-ci.

6. Véhicule à enfourcher selon l'une quelconque des revendications 1 à 5, **caractérisé en ce que** la portion inférieure de couvercle transparent (49) a une plus grande largeur que la portion supérieure de couvercle transparent (48) sur la vue avant de véhicule.

7. Véhicule à enfourcher selon l'une quelconque des revendications 1 à 6, **caractérisé en ce qu'**au moins une partie de la portion inférieure centrale (42) est située en arrière d'une extrémité avant du couvercle transparent (24) sur une vue de dessus de véhicule.

8. Véhicule à enfourcher selon l'une quelconque des revendications 1 à 7, **caractérisé en ce que** la portion de couvercle gauche (32) comprend une surface pentue gauche (53) s'inclinant vers le haut et vers l'arrière sur la vue de côté de véhicule,
la surface pentue gauche (53) est située à gauche du couvercle transparent (24),
la portion de couvercle droite (33) comprend une surface pentue droite (56) s'inclinant vers le haut et vers l'arrière sur la vue de côté de véhicule,
la surface pentue droite (56) est située à droite du couvercle transparent (24),
le couvercle transparent (24) est situé en avant d'au moins une partie de la surface pentue gauche (53), et
le couvercle transparent (24) est situé en avant d'au moins une partie de la surface pentue droite (56).

9. Véhicule à enfourcher selon la revendication 8, **caractérisé en ce que** le couvercle transparent (24) est situé plus haut qu'au moins une partie de la surface pentue gauche (53), et
le couvercle transparent (24) est situé plus haut qu'au moins une partie de la surface pentue droite (56).

10. Véhicule à enfourcher selon l'une quelconque des revendications 1 à 9, **caractérisé par** :
une roue avant (7) ; et
un garde-boue avant (21) disposé au-dessus de la roue avant (7), dans lequel le garde-boue avant (21) a une largeur augmentant vers l'arrière, et
le garde-boue avant (21) est disposé entre une extrémité avant de la portion de couvercle gauche (32) et une extrémité avant de la portion de couvercle droite (33) dans la direction de largeur de véhicule.

11. Véhicule à enfourcher selon l'une quelconque des revendications 1 à 10, **caractérisé par** :
un arbre de direction (17) inséré dans le tube de tête (11) ;
un élément de poignée (19) relié à l'arbre de direction (17) ; et
une unité de compteur (22) comprenant un compteur de vitesse, l'unité de compteur (22) étant fixée à l'élément de poignée (19), dans lequel
l'unité de compteur (22) est exposée vers l'avant.

12. Véhicule à enfourcher selon l'une quelconque des revendications 1 à 11, **caractérisé en ce que** le couvercle avant (14) comprend en outre
une portion de couvercle inférieure gauche (57) disposée au-dessous de la portion de couvercle gauche (32), au moins une partie de la portion de couvercle inférieure gauche (57) étant située vers la gauche de la portion de couvercle gauche (32),
une portion de couvercle inférieure droite (61) disposée au-dessous de la portion de couvercle droite (33), au moins une partie de la portion de couvercle inférieure droite (61) étant située vers la droite de la portion de couvercle droite (33),
un évidement gauche (58) situé entre la portion de couvercle gauche (32) et la portion de couvercle inférieure gauche (57), l'évidement gauche (58) étant en retrait vers l'intérieur dans la direction de largeur de véhicule, et
un évidement droit (62) situé entre la portion de couvercle droite (33) et la portion de couvercle inférieure droite (61), l'évidement droit (62) étant en retrait vers l'intérieur dans la direction de largeur de véhicule.
